# FASCICULE DE BREVET EUROPEEN

(11) **EP 4 355 976 B1**
(45) Date de publication et mention de la délivrance du brevet: **15.10.2025**
(21) Numéro de dépôt: 22731691.6
(22) Date de dépôt: 06.06.2022
(51) Int. Cl.: E21B 17/042, F16L 57/00, F16L 15/00, F16L 15/06

(54) **DISPOSITIF DE RACCORDEMENT POUR ÉLÉMENTS TUBULAIRES**
VERBINDUNGSVORRICHTUNG FÜR ROHRFÖRMIGE ELEMENTE
CONNECTION DEVICE FOR TUBULAR ELEMENTS

(30) Priorité: 17.06.2021 FR 2106436
(43) Date de publication de la demande: 24.04.2024
(73) Titulaire: VALLOUREC OIL AND GAS FRANCE, 59620 Aulnoye-Aymeries (FR); NIPPON STEEL CORPORATION, Chiyoda-ku Tokyo 100-8071 (JP)
(72) Inventeur: HAYAKAWA, Ryunosuke, TOKYO, Tokyo 100-8071 (JP); VILLERT, Sébastien, 92190 MEUDON-LA-FORET (FR)
(74) Mandataire: Mbacke, Mactar
(86) Numéro de dépôt international: PCT/EP2022/065304
(87) Numéro de publication internationale: WO 2022/263218

(56) Documents cités:
- US-A- 3 854 760
- US-A1- 2006 273 586
- US-A1- 2012 074 692

## Description

### Domaine technique

L'invention concerne un dispositif de raccordement permettant d'assurer un accouplement étanche entre deux éléments tubulaires. L'invention vise notamment les dispositifs de raccordement destinés à être utilisés dans les puits de gaz ou de pétrole pour constituer une garniture de forage, une colonne de tube de cuvelage ou de tubage ou encore une colonne de tube de production.

### Arrière-plan technologique

Dans l'état de la technique, il est connu des dispositifs de raccordement destinés à être utilisés dans des puits de gaz ou de pétrole et comportant un premier élément tubulaire, un deuxième élément tubulaire et un manchon d'accouplement pour accoupler de manière étanche le premier et le deuxième éléments tubulaires l'un à l'autre. Chacun des éléments tubulaires comporte une portion mâle filetée qui est vissée à l'intérieure d'une portion femelle filetée du manchon d'accouplement.

Il est connu des dispositifs de raccordement de ce type dans lequel le manchon d'accouplement comporte un talon faisant saillie radialement vers l'intérieur. Un tel dispositif de raccordement est, par exemple, décrit dans le document FR3027649. Le talon présente deux surfaces de butée axiales destinées à coopérer avec des surfaces de butée axiales correspondantes ménagées aux extrémités libres des premier et deuxième éléments tubulaires. Le manchon présente également deux surfaces d'étanchéités coopérant avec des surfaces d'étanchéité correspondantes des premier et deuxième éléments tubulaires. De tels dispositifs de raccordement ne sont pas totalement satisfaisants, notamment en ce qu'en raison de leur talon et des deux surfaces d'étanchéité, leur manchon d'accouplement est complexe et coûteux à usiner.

Le document US2012/0074692 résout ce problème en proposant un dispositif de raccordement dans lequel les fonctions de butée et d'étanchéité sont réalisées entre les deux extrémités libres des deux éléments tubulaires qui sont visées à l'intérieur du manchon d'accouplement. Pour ce faire, les extrémités libres du premier et du deuxième éléments tubulaires comportent des surfaces de butée axiales. En outre, l'extrémité libre de l'un des éléments tubulaires comporte une lèvre d'étanchéité annulaire qui vient en interférence contre une surface d'étanchéité tronconique ménagée sur la surface externe de l'autre des éléments tubulaires afin d'assurer l'étanchéité du raccordement lorsque les surfaces de butée axiale sont en contact l'une contre l'autre. Toutefois, un tel dispositif de raccordement, n'est pas non plus pleinement satisfaisant. En effet, les surfaces de butée axiales doivent présenter des dimensions suffisantes pour résister aux couples de serrage importants qui sont mis en œuvre lorsque l'un des éléments tubulaires est vissé à l'intérieur du manchon d'accouplement jusqu'à ce que sa surface de butée axiale entre en contact avec la surface de butée axiale de l'autre élément tubulaire. Par conséquent, la lèvre d'étanchéité annulaire ne peut être réalisée qu'avec une faible quantité de matière, ce qui la rend particulièrement fragile et ne permet pas de garantir la fiabilité du contact entre la lèvre d'étanchéité et la surface d'étanchéité tronconique correspondante.

Il est également connu de l'art antérieur, le document US3854760 divulguant un joint pour tige de forage de puits de pétrole comprenant un manchon vissé sur l'extrémité d'un tronçon de tuyau pour former la partie filetée intérieurement de la partie femelle du joint, tandis que l'extrémité du tronçon de tuyau sur laquelle est vissé le manchon constitue un épaulement contre lequel l'extrémité de l'autre section de tuyau est en butée.

### Résumé

Une idée à la base de l'invention est de proposer un dispositif de raccordement du type précité qui soit plus simple à fabriquer tout en assurant de manière fiable l'étanchéité du raccordement.

Selon un mode de réalisation, l'invention fournit un dispositif de raccordement comprenant un premier élément tubulaire, un deuxième élément tubulaire et un manchon d'accouplement pour raccorder le premier élément tubulaire et le deuxième élément tubulaire ; le manchon d'accouplement présentant une première portion femelle et une deuxième portion femelle présentant respectivement un premier filetage interne et un deuxième filetage interne, le premier élément tubulaire et le deuxième élément tubulaire présentant respectivement une première portion mâle et une deuxième portion mâle, la première portion mâle et la deuxième portion mâle présentant respectivement un premier filetage externe destiné à coopérer avec le premier filetage interne du manchon d'accouplement et un deuxième filetage externe destiné à coopérer avec le deuxième filetage interne du manchon d'accouplement de sorte à permettre un accouplement par vissage de la première portion mâle à l'intérieur de la première portion femelle et de la deuxième portion mâle à l'intérieur de la deuxième portion femelle,
la première portion mâle comportant une extrémité libre présentant une première surface axiale de butée, la deuxième portion mâle présentant une extrémité libre comportant une deuxième surface de butée axiale et une surface externe d'étanchéité s'étendant entre la deuxième surface axiale de butée et le deuxième filetage externe, la deuxième surface de butée axiale étant destinée à venir en contact contre la première surface de butée axiale lorsque la première portion mâle et la deuxième portion mâle sont respectivement accouplées dans une position d'accouplement à l'intérieur de la première portion femelle et de la deuxième portion femelle, l'extrémité libre de la première portion mâle comportant en outre une lèvre d'étanchéité annulaire, en saillie axialement par rapport à la première surface de butée axiale, la lèvre d'étanchéité étant configurée pour recouvrir la surface externe d'étanchéité et venir en contact radial étanche contre ladite surface externe d'étanchéité lorsque la première surface de butée axiale et la deuxième surface de butée axiale sont en contact l'une contre l'autre, la lèvre d'étanchéité présentant une périphérie externe sur laquelle est ménagée une partie du premier filetage externe.

Un dispositif de raccordement présentant les caractéristiques précitées est particulièrement avantageux en ce qu'il permet de simplifier la fabrication du manchon d'accouplement puisque l'étanchéité est réalisée entre le premier et le deuxième éléments tubulaires. En outre, grâce à la présence du premier filetage externe sur la lèvre d'étanchéité, la quantité de matière constituant ladite lèvre d'étanchéité est importante. Du fait de cette quantité de matière importante pour réaliser la lèvre d'étanchéité, cette dernière présente une rigidité satisfaisante pour assurer le contact étanche avec la surface externe d'étanchéité et garantir l'étanchéité du dispositif.

Selon des modes de réalisation, un tel dispositif de raccordement peut comporter une ou plusieurs des caractéristiques suivantes.

Selon l'invention, le premier filetage externe présente une portion conique et une portion cylindrique, ladite portion cylindrique étant positionnée axialement entre la portion conique et l'extrémité libre de la première portion mâle de sorte que la portion cylindrique soit au moins en partie agencée sur la lèvre d'étanchéité. Grâce à ces caractéristiques, la lèvre d'étanchéité présente une épaisseur radiale plus importante contribuant ainsi à sa rigidité et donc à la fiabilité de l'étanchéité du dispositif.

Selon un mode de réalisation, le premier filetage interne destiné à coopérer avec la portion cylindrique du premier filetage externe est conique.

Selon un mode de réalisation, la portion cylindrique du premier filetage externe et le premier filetage interne conique coopèrent avec interférence, de préférence avec interférence axiale, de manière à assurer un effet autobloquant.

Pour ce faire, selon un mode de réalisation, le premier filetage externe comporte un filet qui présente un flanc d'engagement tourné vers l'extrémité libre de la première portion mâle et un flanc porteur tourné en direction opposée, le premier filetage externe comportant, en position d'accouplement, une zone contrainte axialement s'étendant, à partir de l'extrémité libre de ladite première portion mâle, entre une première zone dans laquelle débute une interférence axiale entre le flanc d'engagement et une surface correspondante du premier filetage interne et une deuxième zone à partir de laquelle le flanc d'engagement n'est pas en interférence contre une surface correspondante du premier filetage interne tandis que le flanc porteur est en interférence contre une zone correspondante dudit premier filetage interne.

Selon un mode de réalisation, la zone contrainte axialement comporte entre 1 et 4 dents.

Selon un mode de réalisation, l'une parmi la première portion mâle et la deuxième portion mâle est une extrémité d'usine et l'autre est une extrémité de chantier, l'extrémité d'usine étant destinée à être accouplée au manchon d'accouplement avant l'extrémité de chantier.

Selon un mode de réalisation avantageux, la première portion mâle forme l'extrémité d'usine et la deuxième portion mâle forme l'extrémité de chantier. De manière alternative, la première portion mâle forme l'extrémité de chantier et la deuxième portion mâle forme l'extrémité d'usine.

Selon un mode de réalisation, le manchon d'accouplement comporte une surface de butée axiale additionnelle qui fait saillie radialement vers l'intérieur du manchon d'accouplement depuis une portion médiane située entre le premier filetage interne et le deuxième filetage interne, la lèvre d'étanchéité étant destinée à venir en contact axial contre ladite surface de butée axiale additionnelle lorsque la première portion mâle est en position d'accouplement.

Selon un mode de réalisation, le premier élément tubulaire comporte un marqueur visuel agencé à une distance prédéterminée de la première surface axiale de butée. Un tel marqueur visuel permet d'assurer un positionnement relatif prédéterminé du premier élément tubulaire par rapport au manchon d'accouplement.

Selon un mode de réalisation, une dent d'extrémité du premier filetage externe est destinée à venir en contact contre la surface de butée axiale additionnelle en position d'accouplement, Autrement dit, la dent du premier filetage externe située la plus proche de l'extrémité libre de la lèvre d'étanchéité est destinée à coopérer avec la surface de butée axiale additionnelle. Selon un mode de réalisation, une hauteur radiale de la surface de butée additionnelle est supérieure ou égale à la moitié d'une hauteur radiale de ladite dent d'extrémité. Selon un mode de réalisation, la hauteur radiale de la surface de butée additionnelle est inférieure ou égale à la hauteur radiale de ladite dent d'extrémité.

Selon un mode de réalisation, le deuxième filetage externe est tronconique et le deuxième filetage interne est tronconique.

Selon un mode de réalisation, le manchon d'accouplement comporte une portion médiane dépourvue de filetage qui est disposée entre le premier filetage interne et le deuxième filetage interne. Une telle portion médiane est avantageuse en ce qu'elle définit un volume libre apte à recevoir un surplus de graisse.

Selon un mode de réalisation, la portion médiane présente une longueur axiale supérieure ou égale à une fois, et de préférence supérieure à deux fois, un pas de filetage du premier filetage externe. Un tel pas de filetage est par exemple la distance séparant les flancs d'engagement ou les flancs porteurs de deux dents successives du premier filetage externe. Une telle longueur de la portion médiane offre une quantité de volume libre importante pour loger le premier filetage externe.

Selon un mode de réalisation, en position d'accouplement, une extrémité de la portion médiane est intercalée axialement entre une extrémité libre de la lèvre d'étanchéité et la première surface axiale de butée. De préférence, la distance axiale séparant la première surface axiale de butée de ladite extrémité de la portion médiane est inférieure ou égale à une fois le pas de filetage du premier filetage externe. Grâce à ces caractéristiques, la concentration de contrainte dans le rayon en sommet de butée est réduite. En outre, ces caractéristiques offrent une bonne stabilité axiale de la lèvre d'étanchéité et donc une meilleure fiabilité de l'étanchéité de la connexion.

Selon un mode de réalisation, la portion médiane forme un renfoncement, le premier filetage externe étant partiellement logé dans ledit renfoncement.

Selon un mode de réalisation, ladite portion médiane est positionnée de telle sorte que, lorsque la première surface de butée axiale et la deuxième surface de butée axiale sont en contact l'une contre l'autre, la lèvre d'étanchéité est en contact radial contre la surface externe d'étanchéité radialement à l'intérieur de la portion médiane.

Selon un mode de réalisation, le contact radial étanche entre la lèvre d'étanchéité et la surface externe d'étanchéité lorsque la première surface de butée axiale et la deuxième surface de butée axiale sont en contact l'une contre l'autre se fait avec une interférence radiale, mesurée en mm, supérieure ou égale à deux fois la distance radiale séparant le premier filetage externe et la portion médiane du manchon d'accouplement. De préférence, cette distance entre le premier filetage externe et ladite portion médiane est mesurée au niveau de la dent d'extrémité du premier filetage externe.

Selon un mode de réalisation, le contact radial étanche entre la lèvre d'étanchéité et la surface externe d'étanchéité lorsque la première surface de butée axiale et la deuxième surface de butée axiale sont en contact l'une contre l'autre se fait avec une interférence radiale déformant la lèvre d'étanchéité radialement vers l'extérieur de sorte que le premier filetage externe soit en contact avec la portion médiane du manchon d'accouplement. Un tel contact offre une bonne stabilité radiale de logement de la lèvre d'étanchéité contre la portion médiane assurant ainsi une bonne fiabilité de l'étanchéité.

Selon un mode de réalisation, le premier élément tubulaire, le deuxième élément tubulaire et le manchon d'accouplement sont en acier.

Selon un mode de réalisation le premier filetage externe est en contact contre le premier filetage interne sur des zones d'interférence présentant un niveau d'interférence qui est supérieur, et avantageusement plus de 10 % supérieure, au niveau d'interférence du deuxième filetage externe contre le deuxième filetage interne. Un tel niveau d'interférence est par exemple lié à une profondeur d'interférence mesurée en mm ou encore à une mesure des surfaces qui sont en interférence. Ainsi, le couple de serrage de la première portion mâle est supérieur à celui de la deuxième portion mâle, ce qui permet d'éviter que la première portion mâle ne se dévisse du manchon d'accouplement lors du vissage de la deuxième portion mâle.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[Fig.1] La figure 1 est une vue en coupe d'un dispositif de raccordement selon un mode de réalisation.
[Fig.2] La figure 2 est une vue en coupe détaillée du dispositif de raccordement de la figure 1 selon une première variante de réalisation.
[Fig.3] La figure 3 est une vue en coupe détaillée du dispositif de raccordement de la figure 1 selon une deuxième variante de réalisation.
[Fig.4] La figure 4 est une vue en coupe détaillée du dispositif de raccordement de la figure 1 selon une troisième variante de réalisation.

### Description des modes de réalisation

Dans la description et les figures, l'axe X correspond à l'axe de vissage des éléments tubulaires du dispositif de raccordement. Par convention, l'orientation «radiale» est dirigée orthogonalement à l'axe X et l'orientation axiale est dirigée parallèlement à l'axe X. Les termes «externe» et «interne » sont utilisés pour définir la position relative d'un élément, par référence à l'axe X, un élément proche de l'axe X est ainsi qualifié d'interne par opposition à un élément externe situé radialement en périphérie.

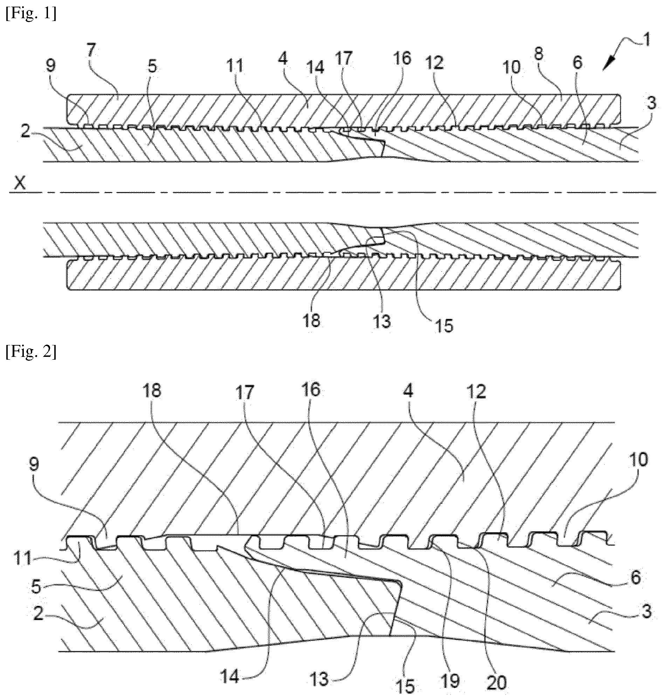

En relation avec les figures 1 et 2, on décrit ci-dessous un dispositif de raccordement 1 selon un premier mode de réalisation. Le dispositif de raccordement 1 comporte un premier élément tubulaire 3, un deuxième élément tubulaire 2 et un manchon d'accouplement 4 permettant de raccorder de manière étanche lesdits éléments tubulaires 2, 3 l'un à l'autre. Les éléments tubulaires 2, 3 et le manchon d'accouplement 4 sont typiquement réalisés en acier.

Chaque élément tubulaire 2, 3 comporte deux extrémités, dont une seule est représentée sur la figure 1, qui sont chacune équipées d'une portion mâle 5, 6 destinée à être vissée dans une portion femelle 7, 8 correspondante du manchon d'accouplement 4. Ainsi, il est possible de raccorder, les uns aux autres, de manière étanche, une pluralité d'éléments tubulaires 2, 3 les uns à la suite des autres, par exemple afin de former une garniture de forage, une colonne de tube de cuvelage ou de tubage ou encore une colonne de tube de production pour un puits de gaz ou de pétrole.

Les portions mâles 5, 6 comportent chacun un filetage externe 11, 12 destiné à coopérer avec le filetage interne 9, 10 de l'une des portions femelles 7, 8 du manchon d'accouplement 4. Plus particulièrement, la portion mâle 6 du premier élément tubulaire 3 comporte un premier filetage externe 12 qui est destiné à coopérer avec un premier filetage interne 10 du manchon d'accouplement 4 et la portion mâle 5 du deuxième élément tubulaire 2 comporte un deuxième filetage externe 11 qui est destiné à coopérer avec un deuxième filetage interne 9 du manchon d'accouplement 4. De manière avantageuse, le manchon d'accouplement 4 comporte une portion médiane 18 qui est positionnée entre le premier filetage interne 10 et le deuxième filetage interne 9 et qui définit ainsi un volume libre destiné à recevoir le surplus de graisse. Dans l'exemple représenté, la portion médiane 18 présente un diamètre qui est sensiblement égal au diamètre du fond des premiers filets adjacents des premier et deuxièmes filetage internes 9, 10 du manchon d'accouplement 4. Selon une variante de réalisation, la portion médiane peut également présenter un diamètre légèrement inférieur au diamètre du fond du premier filet adjacent du premier filetage interne 10 du manchon d'accouplement 4 ce qui permet d'augmenter davantage l'effet auto-bloquant, décrit par la suite, de la portion mâle 6 du premier élément tubulaire 3 dans ledit manchon d'accouplement 4.

Dans le mode de réalisation décrit ci-dessous, la portion mâle 6 du premier élément tubulaire 3 est destinée à être vissée à l'intérieur du manchon d'accouplement 4 avant que la portion mâle 5 du deuxième élément tubulaire 2 ne le soit. Ainsi, la portion mâle 6 du premier élément tubulaire 3 peut, par exemple, être pré-assemblée en usine avec le manchon d'accouplement 4 tandis que la portion mâle 5 du deuxième élément tubulaire 2 n'est assemblée avec le manchon d'accouplement 4 que, dans un second temps, in-situ dans le chantier d'installation du puits de gaz ou de pétrole. Dans un tel cas, la portion mâle 6 du premier élément tubulaire 3 est généralement désignée par l'expression « extrémité d'usine » ou « mill end » en langue anglaise tandis que la portion mâle 5 du deuxième élément tubulaire 2 est désigné par « extrémité de chantier » ou « field end » en langue anglaise. Afin d'éviter que le premier élément tubulaire 6 ne se dévisse du manchon d'accouplement 4 lors du vissage du deuxième élément tubulaire 2, le couple de serrage du premier élément tubulaire 3 dans le manchon d'accouplement 4 dû à la coopération du premier filetage externe 12 avec le premier filetage interne 10 du manchon d'accouplement 4 est supérieur au couple de serrage du deuxième élément tubulaire 2 dû à la coopération du deuxième filetage externe 11 avec le deuxième filetage interne 9 du manchon d'accouplement 4, et de préférence plus de 10 % supérieur. Pour ce faire, en position de butée aussi appelée position d'accouplement, le filet du premier filetage externe 12 est en contact contre le filet du premier filetage interne 10 sur des zones d'interférence dont la surface est supérieure, et avantageusement plus de 10 % supérieur, à la surface des zones d'interférence du filet du deuxième filetage externe 11 contre le filet du deuxième filetage interne 9. De manière alternative ou complémentaire, en position d'accouplement, le filet du premier filetage externe 12 est en contact contre le filet du premier filetage interne 10 avec un niveau d'interférence mesuré en mm supérieur, et de préférence plus de 10% supérieur, au niveau d'interférence mesuré en mm du filet du deuxième filetage externe 11 contre le filet du deuxième filetage interne 9.

Dans le mode de réalisation des figures 1 et 2, le premier filetage interne 10 du manchon d'accouplement 4 est tronconique de sorte que le premier filetage interne 10 présente un angle d'inclinaison par rapport à l'axe X. En d'autres termes, le diamètre du filet du premier filetage interne 10 du manchon d'accouplement 4 augmente de la portion médiane 18 du manchon d'accouplement 4 en direction de l'extrémité du manchon d'accouplement 4 située du côté dudit premier filetage interne 10. Le premier filetage externe 12 du premier élément tubulaire 3 est quant à lui cylindro-conique. En d'autres termes, le premier filetage externe 12 comporte une portion tronconique dans laquelle le diamètre du filet diminue en direction de l'extrémité libre de la portion mâle 6 du premier élément tubulaire 3 puis se poursuit par une portion cylindrique dans laquelle le diamètre du filet reste constant jusqu'à l'extrémité libre de ladite portion mâle 6.

Dans un mode de réalisation avantageux, la longueur de la portion cylindrique du premier filetage externe 12 est suffisante pour d'obtenir un effet auto-bloquant, c'est-à-dire une augmentation du couple de serrage par interférence lors de l'accouplement du premier filetage externe 12 dans le premier filetage interne 10. Ainsi, pour un couple de serrage prédéterminé, il est possible de connaitre, aux tolérances de fabrication près, la position relative de la portion mâle 6 à l'intérieur du manchon d'accouplement 4 en fonction du couple. En pratique, la portion mâle 6 du premier élément tubulaire 3 est vissée à l'intérieur du manchon d'accouplement 4 jusqu'à ce qu'un couple seuil de serrage soit atteint ce qui permet de garantir un positionnement relatif prédéterminé du premier élément par rapport au manchon d'accouplement 4.

Comme représenté sur la figure 2, les filets des premier et deuxième filetages externes 11, 12, sont chacun définis par un flanc d'engagement 19, désigné par « stabbing flank » en langue anglaise et un flanc porteur 20 désigné par « loading flank » en langue anglaise. Le flanc d'engagement 19 est placé en amont du flanc porteur 20. En d'autres termes, le flanc d'engagement 19 du premier filetage externe 12 est tourné vers l'extrémité libre du premier élément tubulaire 3 tandis que le flanc porteur 20 est tourné en direction opposée à ladite extrémité libre.

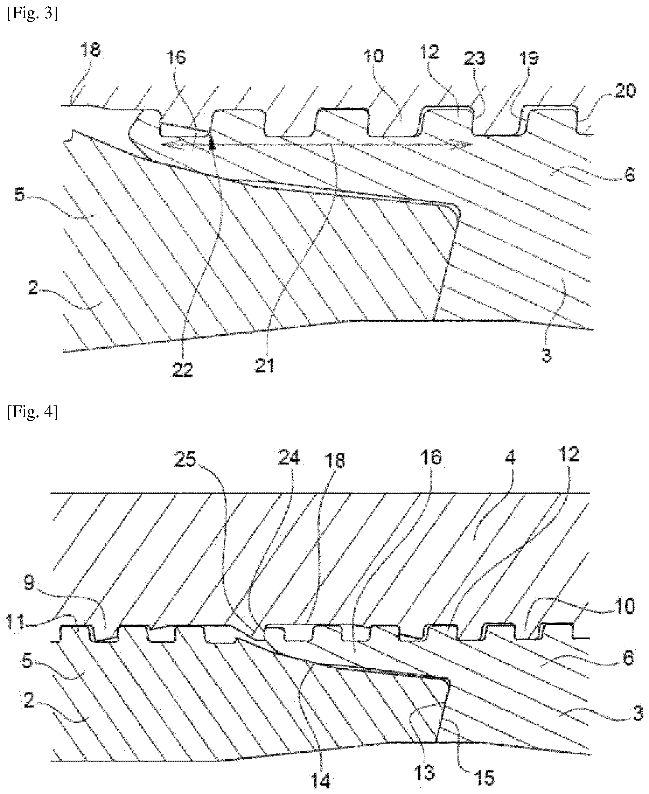

Comme illustré en relation avec le mode de réalisation de la figure 3, pour obtenir l'effet auto-bloquant précité en raison des formes respectivement tronconique et cylindro-conique du premier filetage interne 10 et du premier filetage externe 12, le premier filetage externe 12 présente une zone contrainte axiale 21. Cette zone contrainte axiale s'étend, de l'amont vers l'aval, entre une première zone 22 dans laquelle débute une interférence entre le flanc d'engagement 19 et une surface correspondante du premier filetage interne 10 et une deuxième zone 23 à partir de laquelle le flanc d'engagement 19 n'est plus en interférence contre une surface correspondante du premier filetage interne 10 tandis que le flanc porteur 20 est lui en interférence contre une zone correspondante du premier filetage interne 10. De préférence, cette zone contrainte axiale 21 comporte entre 1 et 4 dents, chaque dent correspondant à une portion du filet s'étendant à 360 ° atour de l'axe X. En d'autres termes, cette zone contrainte axiale 21 correspond à une portion du filet du premier filetage externe 12 s'étendant sur une plage angulaire comprise entre 360° et 1440° autour de l'axe X. Ceci permet d'assurer un effet autobloquant satisfaisant, en particulier pour le vissage de l'extrémité d'usine. En outre, cela assure une meilleure stabilité axiale de la lèvre d'étanchéité 16 décrite ci-après.

Selon d'autres modes de réalisation, le premier filetage interne 10 et le premier filetage externe 12 ne présentent pas la structure précitée assurant un effet auto-bloquant. Dans un tel cas, il est possible d'équiper le premier élément tubulaire 3 d'un marqueur visuel qui est positionné à une distance prédéterminée de l'extrémité libre de sa portion mâle 6 et permet ainsi d'assurer un positionnement relatif prédéterminé du premier élément tubulaire 3 par rapport au manchon d'accouplement 4.

Par ailleurs, le deuxième filetage interne 9 du manchon d'accouplement 4 ainsi que le deuxième filetage externe 11 du deuxième élément tubulaire 2 sont tronconiques. Aussi, les diamètres du filet du deuxième filetage interne 9 du manchon d'accouplement 4 augmente de la portion médiane 18 du manchon d'accouplement 4 vers l'une des extrémités du manchon d'accouplement 4 tandis que le diamètre du filet du filetage externe 11 du deuxième élément tubulaire 2 diminue en direction de l'extrémité libre du deuxième élément tubulaire 2.

Comme représenté de manière détaillée sur la figure 2, l'extrémité libre de la portion mâle 6 comporte une première surface axiale de butée 15 et une lèvre d'étanchéité 16, de forme annulaire, qui fait saillie axialement par rapport à la première surface de butée axiale 15, radialement à l'extérieur de celle-ci. L'extrémité libre de la portion mâle 5 du deuxième élément tubulaire 2 comporte une deuxième surface de butée axiale 13 et une surface d'étanchéité externe 14 qui s'étend entre la deuxième surface de butée axiale 13 et le deuxième filetage externe 11. La surface d'étanchéité externe 14 s'étend en biais par rapport à l'axe X de sorte que le diamètre de la portion mâle 5 diminue du deuxième filetage externe 11 vers la deuxième surface de butée axiale 13.

Ainsi, lors du vissage de la portion mâle 5 du deuxième élément tubulaire 2 à l'intérieur du manchon d'accouplement 4, la deuxième surface de butée axiale 13 vient en butée axialement contre la première surface de butée axiale 15, ce qui permet de détecter que le deuxième élément tubulaire 2 a atteint la position prédéterminée souhaitée.

Par ailleurs, la lèvre d'étanchéité 16 vient en contact contre la surface externe d'étanchéité 14, ce qui permet d'assurer une étanchéité entre le premier et le deuxième éléments tubulaires 2, 3.

Plus particulièrement, la lèvre d'étanchéité 16 présente une surface interne comportant une portée d'étanchéité, également appelée surface d'étanchéité de la lèvre d'étanchéité 16. La surface interne de la lèvre d'étanchéité 16 est usinée de sorte que, lors du vissage du deuxième élément tubulaire 2 à l'intérieur du manchon d'accouplement 4, la surface externe d'étanchéité 14 vienne contre la portée d'étanchéité de la surface interne de la lèvre d'étanchéité 16 et déforme ladite portée d'étanchéité de la lèvre d'étanchéité 16 élastiquement. Ce contact avec interférence permet d'assurer l'étanchéité entre la surface externe d'étanchéité 14 et la lèvre d'étanchéité 16.

Dans le mode de réalisation représenté, la première et la deuxième surfaces de butée axiale 13, 15 présentent des formes tronconiques complémentaires. Plus particulièrement, la première surface de butée axiale 15 présente une forme tronconique orientée de telle sorte que la section radiale de la première surface de butée axiale 15 diminue en direction de l'extrémité de la première portion mâle 6 tandis que la deuxième surface de butée axiale 13 présente une forme tronconique orientée de telle sorte que la section radiale de la deuxième surface de butée axiale 13 augmente en direction de l'extrémité de la deuxième portion mâle 5. Selon une réalisation avantageuse, les formes tronconiques complémentaires présentent un demi angle au sommet qui est inférieur à 90° et avantageusement supérieure à 70°, par exemple de l'ordre de 75°. Ces inclinaisons de la première et la deuxième surfaces de butée axiale 13 15 tendent, lorsque lesdites surfaces de butée axiale 13, 15 coopèrent, à contraindre la surface externe d'étanchéité 14 contre la lèvre d'étanchéité 16 et donc à garantir un contact étanche satisfaisant.

Comme représenté sur les figures 1 et 2, la lèvre d'étanchéité 16 présente une périphérie externe 17 sur laquelle est ménagée une partie du premier filetage externe 12. Un tel agencement est particulièrement avantageux en ce qu'il permet de renforcer la lèvre d'étanchéité 16 en augmentant la quantité de matière la constituant. De manière avantageuse, la quantité de matière constituant la lèvre d'étanchéité 16 est encore plus importante du fait de la forme cylindrique du premier filetage externe 12 à l'extrémité de la première portion mâle 6.

Notons que, dans un mode de réalisation alternatif, la structure des extrémités libres des première et deuxième portions mâles 5, 6 est inversée de sorte que la lèvre d'étanchéité 16 est ménagée sur la portion mâle 5 tandis que la surface externe d'étanchéité 14 est ménagée sur la portion mâle 6.

La figure 4 illustre un autre mode de réalisation dans lequel le manchon d'accouplement 4 comporte une surface de butée axiale additionnelle 24 qui est ménagée dans la portion médiane 18 dudit manchon d'accouplement 4 et contre laquelle l'extrémité de la lèvre d'étanchéité 16 est destinée à venir en contact lorsque le premier élément tubulaire 3 est vissé à l'intérieur du manchon d'accouplement 4. Une telle surface de butée axiale additionnelle 24 permet de garantir un positionnement relatif prédéterminé du premier élément tubulaire 3 par rapport au manchon d'accouplement 4, même lorsque le premier filetage externe 12 et le premier filetage interne 10 n'assurent pas un effet auto-bloquant. Dans le mode de réalisation représenté, la surface de butée axiale additionnelle 24 est définie par un flanc d'un talon annulaire 25 faisant saillie radialement vers l'intérieur du manchon d'accouplement 4.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication

## Revendications

1. Dispositif de raccordement (1) comprenant un premier élément tubulaire (3), un deuxième élément tubulaire (2) et un manchon d'accouplement (4) pour raccorder le premier élément tubulaire (3) et le deuxième élément tubulaire (2) ; le manchon d'accouplement (4) présentant une première portion femelle (8) et une deuxième portion femelle (7) présentant respectivement un premier filetage interne (10) et un deuxième filetage interne (9), le premier élément tubulaire (3) et le deuxième élément tubulaire (2) présentant respectivement une première portion mâle (6) et une deuxième portion mâle (5), la première portion mâle (6) et la deuxième portion mâle (5) présentant respectivement un premier filetage externe (12) destiné à coopérer avec le premier filetage interne (10) du manchon d'accouplement (4) et un deuxième filetage externe (11) destiné à coopérer avec le deuxième filetage interne (9) du manchon d'accouplement (4) de sorte à permettre un accouplement par vissage de la première portion mâle (6) à l'intérieur de la première portion femelle (8) et de la deuxième portion mâle (5) à l'intérieur de la deuxième portion femelle (7),
la première portion mâle (6) comportant une extrémité libre présentant une première surface axiale de butée (15), la deuxième portion mâle (5) présentant une extrémité libre comportant une deuxième surface de butée axiale (13) et une surface externe d'étanchéité (14) s'étendant entre la deuxième surface axiale de butée (13) et le deuxième filetage externe (11), la deuxième surface de butée axiale (13) étant destinée à venir en contact contre la première surface de butée axiale (15) lorsque la première portion mâle (6) et la deuxième portion mâle (5) sont respectivement accouplées dans une position d'accouplement à l'intérieur de la première portion femelle (8) et de la deuxième portion femelle (7), l'extrémité libre de la première portion mâle (6) comportant en outre une lèvre d'étanchéité (16) annulaire, en saillie axialement par rapport à la première surface de butée axiale (15), la lèvre d'étanchéité (16) étant configurée pour recouvrir la surface externe d'étanchéité (14) et venir en contact radial étanche contre ladite surface externe d'étanchéité (14) lorsque la première surface de butée axiale (15) et la deuxième surface de butée axiale (13) sont en contact l'une contre l'autre, la lèvre d'étanchéité (16) présentant une périphérie externe (17) sur laquelle est ménagée une partie du premier filetage externe (12), **caractérisé en ce que** le premier filetage externe (12) présente une portion conique et une portion cylindrique qui est positionnée axialement entre la portion conique dudit premier filetage externe (12) et l'extrémité libre de la première portion mâle (6) de sorte que la portion cylindrique soit au moins en partie agencée sur la lèvre d'étanchéité.

2. Dispositif de raccordement (1) selon la revendication 1, dans lequel le premier filetage externe (12) comporte un filet qui présente un flanc d'engagement (19) tourné vers l'extrémité libre de la première portion mâle (6) et un flanc porteur (20) tourné en direction opposée, le premier ou deuxième filetage externe (11, 12) comportant une zone contrainte axiale (21) s'étendant, à partir de l'extrémité libre de première portion mâle (6), entre une première zone (22) dans laquelle débute une interférence axiale entre le flanc d'engagement (19) et une surface correspondante du premier filetage interne (10) et une deuxième zone (23) à partir de laquelle le flanc d'engagement (19) n'est pas en interférence contre une surface correspondante du premier filetage interne (10) tandis que le flanc porteur (20) est en interférence contre une zone correspondante dudit premier filetage interne (10).

3. Dispositif de raccordement (1) selon la revendication 2, dans lequel la zone contrainte axiale (21) comporte entre 1 et 4 dents.

4. Dispositif de raccordement (1) selon l'une quelconque des revendications 1 à 3, le manchon d'accouplement (4) comporte une surface de butée axiale additionnelle (24) qui fait saillie radialement vers l'intérieur du manchon d'accouplement (4) depuis une portion médiane (18) située entre le premier filetage interne (10) et le deuxième filetage interne (9), la lèvre d'étanchéité(16) étant destinée à venir en contact contre ladite surface de butée axiale additionnelle (24) en position d'accouplement.

5. Dispositif de raccordement (1) selon la revendication 4, dans lequel une dent d'extrémité du premier filetage externe (12) est destinée à venir en contact contre la surface de butée axiale additionnelle (24) en position d'accouplement, une hauteur radiale de la surface de butée additionnelle (24) étant supérieure ou égale à la moitié d'une hauteur radiale de ladite dent d'extrémité.

6. Dispositif de raccordement (1) selon l'une quelconque des revendications 1 à 5, dans lequel le deuxième filetage externe (11) de l'extrémité de champs est tronconique et le deuxième filetage interne (9) est tronconique.

7. Dispositif de raccordement (1) selon l'une quelconque des revendications 1 à 6, dans lequel le manchon d'accouplement (4) comporte une portion médiane (18) dépourvue de filetage qui est disposée entre le premier filetage interne (10) et le deuxième filetage interne (9).

8. Dispositif de raccordement (1) selon la revendication 7, dans lequel la portion médiane (18) présente une longueur axiale supérieure ou égale à une fois un pas de filetage du premier filetage externe (12).

9. Dispositif de raccordement (1) selon la revendication 7 ou 8, dans lequel, en position d'accouplement, une extrémité de la portion médiane (18) est intercalée axialement entre une extrémité libre de la lèvre d'étanchéité (16) et la première surface axiale de butée (15).

10. Dispositif de raccordement (1) selon l'une des revendications 7 à 9, dans lequel ladite portion médiane (18) est positionnée de telle sorte que, lorsque la première surface de butée axiale (15) et la deuxième surface de butée axiale (13) sont en contact l'une contre l'autre en position d'accouplement, la lèvre d'étanchéité (16) est en contact radial contre la surface externe d'étanchéité (14) radialement à l'intérieur de la portion médiane (18).

11. Dispositif de raccordement (1) selon l'une quelconque des revendications 1 à 10, dans lequel le premier élément tubulaire (2), le deuxième élément tubulaire (3) et le manchon d'accouplement (4) sont en acier.

12. Dispositif de raccordement (1) selon l'une quelconque des revendications 1 à 11, dans lequel le premier filetage externe (12) est en contact contre le premier filetage interne (10) sur des zones d'interférence présentant un niveau d'interférence qui est supérieur au niveau d'interférence du deuxième filetage externe (11) contre le deuxième filetage interne (9).

## Patentansprüche

1. Verbindungsvorrichtung (1), aufweisend ein erstes rohrförmiges Element (3), ein zweites rohrförmiges Element (2) und eine Kopplungsmuffe (4) zum Verbinden des ersten rohrförmigen Elements (3) und des zweiten rohrförmigen Elements (2); wobei die Kopplungsmuffe (4) einen ersten Aufnahmeabschnitt (8) und einen zweiten Aufnahmeabschnitt (7) mit jeweils einem ersten Innengewinde (10) und einem zweiten Innengewinde (9) aufweist, wobei das erste rohrförmige Element (3) und das zweite rohrförmige Element (2) jeweils einen ersten Einsteckabschnitt (6) und einen zweiten Einsteckabschnitt (5) aufweisen, wobei der erste Einsteckabschnitt (6) und der zweite Einsteckabschnitt (5) jeweils ein erstes Außengewinde (12), das dazu bestimmt ist, mit dem ersten Innengewinde (10) der Kopplungsmuffe (4) zusammenzuwirken, und ein zweites Außengewinde (11), das dazu bestimmt ist, mit dem zweiten Innengewinde (9) der Kopplungsmuffe (4) zusammenzuwirken, aufweisen, um eine Kopplung durch Verschraubung des ersten Einsteckabschnitts (6) im Inneren des ersten Aufnahmeabschnitts (8) und des zweiten Einsteckabschnitts (5) im Inneren des zweiten Aufnahmeabschnitts (7) zu ermöglichen, wobei der erste Einsteckabschnitt (6) ein eine erste axiale Anschlagfläche (15) aufweisendes freies Ende umfasst, wobei der zweite Einsteckabschnitt (5) ein freies Ende aufweist, das eine zweite axiale Anschlagfläche (13) und eine äußere Dichtfläche (14) umfasst, die sich zwischen der zweiten axialen Anschlagfläche (13) und dem zweiten Außengewinde (11) erstreckt, wobei die zweite axiale Anschlagfläche (13) dazu bestimmt ist, an der ersten axialen Anschlagfläche (15) in Kontakt zu gelangen, wenn der erste Einsteckabschnitt (6) und der zweite Einsteckabschnitt (5) jeweils in einer Kopplungsposition im Inneren des ersten Aufnahmeabschnitts (8) und des zweiten Aufnahmeabschnitts (7) gekoppelt sind, wobei das freie Ende des ersten Einsteckabschnitts (6) ferner eine in Bezug auf die erste axiale Anschlagfläche (15) axial vorspringende, ringförmige Dichtlippe (16) umfasst, wobei die Dichtlippe (16) ausgelegt ist, die äußere Dichtfläche (14) zu überdecken und in radialen, dichten Kontakt an der äußeren Dichtfläche (14) zu gelangen, wenn die erste axiale Anschlagfläche (15) und die zweite axiale Anschlagfläche (13) aneinander in Kontakt sind, wobei die Dichtlippe (16) einen äußeren Umfang (17) aufweist, an dem ein Teil des ersten Außengewindes (12) ausgebildet ist, **dadurch gekennzeichnet, dass** das erste Außengewinde (12) einen konischen Abschnitt und einen zylindrischen Abschnitt aufweist, der axial zwischen dem konischen Abschnitt des ersten Außengewindes (12) und dem freien Ende des ersten Einsteckabschnitts (6) positioniert ist, damit der zylindrische Abschnitt zumindest teilweise an der Dichtlippe eingerichtet ist

2. Verbindungsvorrichtung (1) nach Anspruch 1, wobei das erste Außengewinde (12) ein Gewinde umfasst, das eine dem freien Ende des ersten Einsteckabschnitts (6) zugewandte Eingriffsflanke (19) und eine in entgegengesetzte Richtung weisende Tragflanke (20) umfasst, wobei das erste oder zweite Außengewinde (11, 12) einen axialen Zwangsbereich (21) umfasst, der sich ausgehend von dem freien Ende des ersten Einsteckabschnitts (6) zwischen einem ersten Bereich (22), in dem ein axialer Eingriff zwischen der Eingriffsflanke (19) und einer entsprechenden Fläche des ersten Innengewindes (10) beginnt, und einem zweiten
Bereich (23) erstreckt, von dem ausgehend die Eingriffsflanke (19) nicht an einer entsprechenden Fläche des ersten Innengewindes (10) in Eingriff ist, während die Tragflanke (20) an einem entsprechenden Bereich des ersten Innengewindes (10) in Eingriff ist.

3. Verbindungsvorrichtung (1) nach Anspruch 2, wobei der axiale Zwangsbereich (21) zwischen 1 und 4 Zähne umfasst.

4. Verbindungsvorrichtung (1) nach einem der Ansprüche 1 bis 3, wobei die Kopplungsmuffe (4) eine zusätzliche axiale Anschlagfläche (24) umfasst, die von einem zwischen dem ersten Innengewinde (10) und dem zweiten Innengewinde (9) gelegenen Mittelabschnitt (18) radial in Richtung des Inneren der Kopplungsmuffe (4) vorspringt, wobei die Dichtlippe (16) dazu bestimmt ist, in Kopplungsposition an der zusätzlichen axialen Anschlagfläche (24) in Kontakt zu gelangen.

5. Verbindungsvorrichtung (1) nach Anspruch 4, wobei ein Endzahn des ersten Außengewindes (12) dazu bestimmt ist, in Kopplungsposition an der zusätzlichen axialen Anschlagfläche (24) in Kontakt zu gelangen, wobei eine radiale Höhe der zusätzlichen Anschlagfläche (24) größer oder gleich der Hälfte einer radialen Höhe des Endzahns ist.

6. Verbindungsvorrichtung (1) nach einem der Ansprüche 1 bis 5, wobei das zweite Außengewinde (11) des Feldendes
kegelstumpfförmig ist und das zweite Innengewinde (9) kegelstumpfförmig ist.

7. Verbindungsvorrichtung (1) nach einem der Ansprüche 1 bis 6, wobei die Kopplungsmuffe (4) einen gewindefreien Mittelabschnitt (18) aufweist, der zwischen dem ersten Innengewinde (10) und dem zweiten Innengewinde (9) angeordnet ist.

8. Verbindungsvorrichtung (1) nach Anspruch 7, wobei der Mittelabschnitt (18) eine axiale Länge aufweist, die größer oder gleich dem Einfachen einer Gewindesteigung des ersten Außengewindes (12) ist.

9. Verbindungsvorrichtung (1) nach Anspruch 7 oder 8, wobei in Kopplungsposition ein Ende des Mittelabschnitts (18) axial zwischen einem freien Ende der Dichtlippe (16) und der ersten axialen Anschlagfläche (15) eingefügt ist. 10

10. Verbindungsvorrichtung (1) nach einem der Ansprüche 7 bis 9, wobei der Mittelabschnitt (18) derartig positioniert ist, dass, wenn die erste axiale Anschlagfläche (15) und die zweite axiale Anschlagfläche 15 (13) in Kopplungsposition aneinander in Kontakt sind, die Dichtlippe (16) radial im Inneren des Mittelabschnitts (18) in radialem Kontakt an der äußeren Dichtfläche (14) ist.

11. Verbindungsvorrichtung (1) nach einem der Ansprüche 1 bis 10, wobei das erste rohrförmige Element (2), das zweite rohrförmige Element (3) und die Kopplungsmuffe (4) aus Stahl bestehen.

12. Verbindungsvorrichtung (1) nach einem der Ansprüche 1 bis 11, wobei das erste Außengewinde (12) an dem Innengewinde (10) an Eingriffsbereichen in Kontakt ist, die einen Eingriffspegel aufweisen, der über dem Eingriffspegel des zweiten Außengewindes (11) an dem zweiten Innengewinde (9) liegt.

## Claims

1. Connection device (1) comprising a first tubular element (3), a second tubular element (2) and a coupling sleeve (4) in order to connect the first tubular element (3) and the second tubular element (2), the coupling sleeve (4) having a first female portion (8) and a second female portion (7) having respectively a first inner thread (10) and a second inner thread (9), the first tubular element (3) and the second tubular element (2) having respectively a first male portion (6) and a second male portion (5), the first male portion (6) and the second male portion (5) having respectively a first outer thread (12) which is designed to cooperate with the first inner thread (10) of the coupling sleeve (4), and a second outer thread (11) which is designed to cooperate with the second inner thread (9) of the coupling sleeve (4), such as to permit coupling by screwing of the first male portion (6) to the interior of the first female portion (8) and of the second male portion (5) to the interior of the second female portion (7), the first male portion (6) comprising a free end having a first axial stop surface (15), the second male portion (5) having a free end comprising a second axial stop surface (13) and an outer sealing surface (14) extending between the second axial stop surface (13) and the second outer thread (11), the second axial stop surface (13) being designed to come into contact against the first axial stop surface (15) when the first male portion (6) and the second male portion (5) are coupled respectively in a coupling position in the interior of the first female portion (8) and the second female portion (7), the free end of the first male portion (6) also comprising an annular sealing lip (16), projecting axially relative to the first axial stop surface (15), the sealing lip (16) being configured to cover the outer sealing surface (14) and to come into sealed radial contact against the said outer sealing surface (14) when the first axial stop surface (15) and the second axial stop surface (13) are in contact against one another, the sealing lip (16) having an outer periphery (17) on which part of the first outer thread (12) is provided, wherein the first outer thread (12) has a conical portion and a cylindrical portion which is positioned axially between the conical portion of the said first outer thread (12) and the free end of the first male portion (6), such that the cylindrical portion is at least partly arranged on the sealing lip.

2. Connection device (1) according to Claim 1, wherein the first outer thread (12) comprises threading which has an engagement flank (19) facing towards the free end of the first male portion (6), and a support flank (20) facing in the opposite direction, the first or second outer thread (11, 12) comprising an area (21) which is stressed axially, extending, starting from the free end of the said male portion (6), between a first area (22) in which axial interference begins between the engagement flank (19) and a corresponding surface of the first inner thread (10), and a second area (23) starting from which the engagement flank (19) is not in interference against a corresponding surface of the first inner thread (10), whereas the support flank (20) is in interference against a corresponding area of the said first inner thread (10).

3. Connection device (1) according to Claim 2, wherein the axial stressed area (21) comprises between 1 and 4 teeth.

4. Connection device (1) according to any one of Claims 1 to 3, wherein the coupling sleeve (4) comprises an additional axial stop surface (24) which projects radially towards the interior of the coupling sleeve (4), from a median portion (18) situated between the first inner thread (10) and the second inner thread (9), the sealing lip (16) being designed to come into contact against the said additional axial stop surface (24) in the coupling position.

5. Connection device (1) according to Claim 4, wherein an end tooth of the first outer thread (12) is designed to come into contact against the additional axial stop surface (24) in the coupling position, a radial height of the additional stop surface (24) being equal to, or greater than, half a radial height of the said end tooth.

6. Connection device (1) according to any one of Claims 1 to 5, wherein the second outer thread (11) of the end of the field is frusto-conical, and the second inner thread (9) is frusto-conical.

7. Connection device (1) according to any one of Claims 1 to 6, wherein the coupling sleeve (4) comprises a median portion (18) without a thread which is positioned between the first inner thread (10) and the second inner thread (9).

8. Connection device (1) according to Claim 7, wherein the median portion (18) has an axial length which is equal to, or greater than, one times a thread pitch of the first outer thread (12).

9. Connection device (1) according to Claim 7 or 8, wherein, in the coupling position, an end of the median portion (18) is interposed axially between a free end of the sealing lip (16) and the first axial stop surface (15).

10. Connection device (1) according to any one of Claims 7 to 9, wherein the said median portion (18) is positioned such that, when the first axial stop surface (15) and the second axial stop surface (13) are in contact against one another in the coupling position, the sealing lip (16) is in radial contact against the outer sealing surface (14) which is radially in the interior of the median portion (18).

11. Connection device (1) according to any one of Claims 1 to 10, wherein the first tubular element (2), the second tubular element (3) and the coupling sleeve (4) are made of steel.

12. Connection device (1) according to any one of Claims 1 to 11, wherein the first outer thread (12) is in contact against the first inner thread (10) on areas of interference having a level of interference which is greater than the level of interference of the second outer thread (11) against the second inner thread (9).
